**Europäisches Patentamt**

**European Patent Office**

**Office européen des brevets**

(19)

(11) Veröffentlichungsnummer : **0 315 623 B1**

(12)

# EUROPÄISCHE PATENTSCHRIFT

(45) Veröffentlichungstag der Patentschrift :
**22.01.92 Patentblatt 92/04**

(51) Int. Cl.$^5$ : **A01J 25/02**

(21) Anmeldenummer : **88890274.9**

(22) Anmeldetag : **03.11.88**

(54) Käsefertiger.

(30) Priorität : **04.11.87 AT 2919/87**

(43) Veröffentlichungstag der Anmeldung :
**10.05.89 Patentblatt 89/19**

(45) Bekanntmachung des Hinweises auf die
Patenterteilung :
**22.01.92 Patentblatt 92/04**

(84) Benannte Vertragsstaaten :
**AT BE CH DE ES FR GB GR IT LI LU NL SE**

(56) Entgegenhaltungen :
**EP-A- 0 133 587
DE-A- 2 601 359
FR-A- 2 158 479
FR-A- 2 564 694**

(73) Patentinhaber : **JOSEF BERTSCH
GESELLSCHAFT mbH & Co. KESSEL- UND
MASCHINENFABRIK
INDUSTRIEANLAGENBAU
Herrengasse 23
A-6700 Bludenz (AT)**

(72) Erfinder : **Bertsch, Hubert
Herrengasse 14
A-6700 Bludenz (AT)**

(74) Vertreter : **Holzer, Walter, Dipl.-Ing. et al
Patentanwälte, Dipl.-Ing. Dr. techn. Schütz
Alfred, Dipl.-Ing. Holzer Walter, Dipl.-Ing.
Pfeifer Otto, Fleischmanngasse 9
A-1040 Wien (AT)**

EP 0 315 623 B1

## Beschreibung

Die Erfindung betrifft einen Käsefertiger mit einem einen Aufnahmeraum für das Milchprodukt begrenzenden Behälter, der eine aus zwei teilzylindrischen Hälften zusammengesetzte Wandung und einen sich von dieser nach unten erstreckenden Boden aufweist, welcher ebenfalls aus zwei, entlang einer Quermittelebene des Behälters aneinandergrenzenden Hälften besteht, die mit je einem Auslauf versehen sind, wobei in jeder Behälterhälfte ein vertikaler Rühr- und Schneidflügel drehbar ist, welcher die zugeordneten Abschnitte der Behälterwandung und des Bodenbereiches überstreicht und in einem Behälteroberteil gelagert ist.

Ein Käsefertiger dieser Art ist aus der Druckschrift EP-A-0133587 bekannt, welche die Merkmale des Oberbegriffs des Anspruchs 1 erhält. Bei diesem Käsefertiger ist der Bodenteil jeder Behälterhälfte als Abschnitt eines Kreiskegels ausgebildet, in dessen Spitze sich ein Auslauf befindet. Diese Ausführung hat vor allem den Nachteil, daß im Bereich des stumpfwinkeligen Überganges zwischen Behälterboden und Behälterwandung die Umwälzbewegung der von den Rühr- und Schneidflügeln gegen die Behälterwand bewegten Gutes, insbesondere in Richtung nach oben erschwert wird. Ferner besteht das Problem, daß es im Auslaufbereich bei der Entleerung infolge des Zusammenfallens von Rührflügelachse und Auslaufachse zu Wirbelbildungen bzw. zur Ausbildung von durch den Auslauf abziehenden Luftsträhnen kommt. Außerdem kann durch den doppelkegeligen Boden eine gleichmäßige Befüllung des Behälters, die von einer bestimmten Stelle desselben ausgeht, nicht erreicht werden. Schließlich herrscht im Betrieb im Bereich der Kegelspitze der größte statische Druck, was eine ungleichmäßige Zerteilung der Gallerte zur Folge hat. Anderseits besteht die Gefahr einer Klumpenbildung und Verstopfung des Auslaufes wegen des Zusammenfallens von höherem statischem Druck und geringer Umwälzgeschwindigkeit im Auslaufbereich.

Die Erfindung zielt darauf ab, einen Käsefertiger der einleitend angegebenen Art zu schaffen. der die vorstehend geschilderten Nachteile der bekannten Ausführung vermeidet und bei guter Befüll-, Entleersowie Reinigungsmöglichkeit ein optimales Umwälzen des Gutes im Behälter ermöglicht und jegliche Störung im Auslaufbereich hintanhält. Der erfindungsgemäße Käsefertiger zeichnet sich dadurch aus, daß jede Hälfte des Behälterbodens einen in den vertikalen Behälterwandteil übergehenden, bezüglich des Aufnahmeraumes konkav gewölbten Abschnitt und einen an diesen anschließenden ebenflächigen Abschnitt aufweist, wobei die ebenflächigen Abschnitte der Bodenhälften im wesentlichen kreisförmige Kontur haben und in der Quermittelebene des Behälters aneinandergrenzen und wobei der Auslauf in jedem ebenflächigen Abschnitt bezüglich der Drehachse des Rühr- und Schneidflügels exzentrisch angeordnet ist.

Durch diese Ausbildung wird zufolge des abgerundeten Überganges zwischen Behälterwandung und Bodenteil eine bestmögliche Umwälzung des gegen die Behälterwandung gedrückten Gutes erreicht, wobei zugleich im Falle einer Beheizung oder Kühlung der Behälterwandung ein verbesserter Wärmeübergang erzielt wird. Die schonende Umlenkung des Gutes hat auch eine geringere "Staubbildung" des Bruch-Molke-Gemisches zur Folge. Der im wesentlichen schalenförmige Boden des erfindungsgemäßen Käsefertigers ermöglicht eine gleichmäßige Befüllung und Entleerung des Behälters. Durch die exzentrische Anordnung des Auslaufes wird jegliche Wirbelbildung und Luftsträhnenbildung während des Entleervorganges vermieden. Der Auslauf wird außerdem vor Verstopfung bewahrt, weil der zugeordnete Rühr- und Schneidflügel den Auslaufbereich ständig überstreicht.

Nach einem weiteren Merkmal der Erfindung ist der konkav gewölbte Abschnitt jeder Bodenhälfte im Vertikalschnitt aus zumindest einem Kreisbogen, vorzugsweise aus zwei aneinanderstoßenden Kreisbögen gebildet, von denen der an den vertikalen Behälterwandteil angrenzende Übergangskreisbogen kleineren Durchmesser hat.

Bei der erfindungsgemäßen Behälterausbildung können die im wesentlichen kreisförmigen ebenflächigen Abschnitte der beiden Bodenhälften einander in der Quermittelebene des Käsefertigers berühren oder einander auch bezüglich der Quermittelebene des Käsefertigers in einem vorbestimmten Ausmaß überlappen.

Nach einem anderen Merkmal der Erfindung ist der Behälter an eine Druckmediumquelle angeschlossen, über welche der Aufnahmeraum zwecks Entleerung desselben unter Überdruck setzbar ist. Durch diese Maßnahme können mechanische Förderelemente. wie z.B. eine Molkepumpe und/oder eine Käsebruchpumpe, vermieden werden und damit eine schonende Behandlung des Gutes, insbesondere ein Bruchkorn vorbestimmter Größe erzielt werden, weil keine Gefahr einer Zerschlagung des Gutes durch die Förderelemente besteht. Die Austragsleistung kann dabei vorteilhaft stufenlos geregelt werden.

Ausführungsbeispiele der Erfindung werden nachfolgend unter Bezugnahme auf die Zeichnungen näher erläutert. Es zeigen :

Fig. 1 einen Käsefertiger gemäß der Erfindung im Schnitt nach der Linie I-I in Fig. 2,

Fig. 2 eine schematische Draufsicht auf den leeren Behälter des Käsefertigers nach Fig. 1 und

Fig. 3 eine schematische Draufsicht auf eine abgewandelte Ausführungsform des Behälters des Käsefertigers.

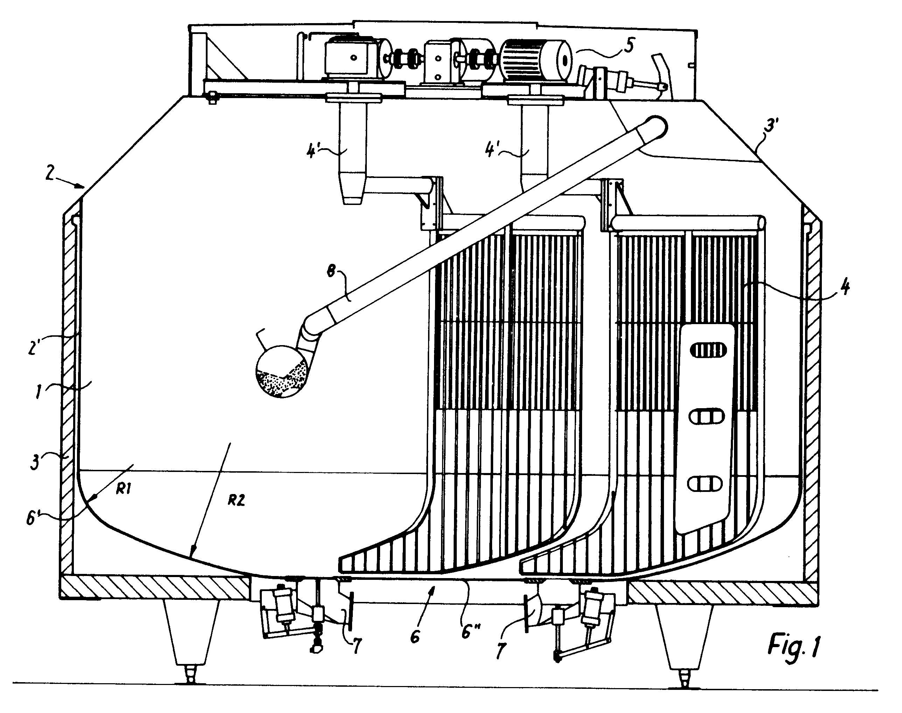

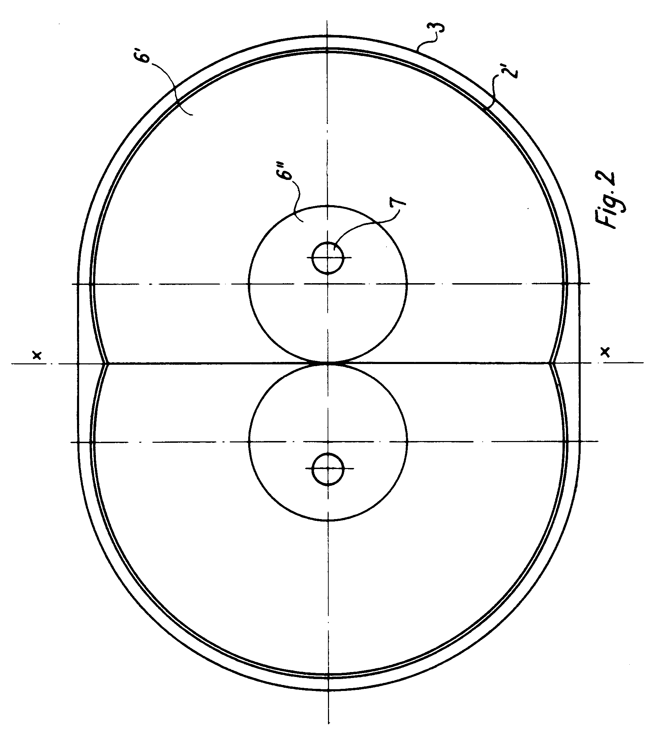

Der in Fig. 1 dargestellte Käsefertiger hat einen den Aufnahmeraum 1 für das Milchprodukt bildenden Behälter 2 mit aus zwei Teilzylindern zusammengesetzten Behälterwandteilen 2′. Die Wandteile 2′ grenzen in der Draufsicht nach Fig. 2 entlang einer die Quermittelebene X-X des Behälters bildenden Symmetrieebene aneinander. Der Behälter 2 wird von einem in der Draufsicht rennbahnförmigen Außenmantel 3 umgeben. Oberhalb des Behälters 2 hat der Außenmantel 3 einen sich nach oben verjüngenden oberen Mantelabschnitt 3′. In jeder Behälterhälfte ist ein Rühr- und Schneidflügel 4 um eine vertikale Achse drehbar, die mit der betreffenden Kreiszylinderachse zusammenfällt. Die Rühr- und Schneidflügel 4 sind mit ihren Antrieben 4′ von einer am oberen Mantelabschnitt 3′ befestigten Rührwerksbrücke 5 getragen.

Der Boden des Behälters 2 besteht ebenfalls aus zwei, entlang der Quermittelebene X-X aneinandergrenzenden Hälften. Die Wandung jeder Bodenhälfte hat einen in die Zylinderwandung übergehenden, bezüglich des Aufnahmeraumes 1 konkav gewölbten Abschnitt 6′ und einen horizontalen ebenflächigen unteren Abschnitt 6″. Der konkav gewölbte Abschnitt 6′ ist im Schnitt nach Fig. 1 aus zwei Kreisbögen zusammengesetzt. Ein Kreisbogen mit kleinerem Radius R1 schließt an die Zylinderwandung an und steht über einen Kreisbogen mit erheblich größerem Radius R2 mit dem im Schnitt geraden Bodenabschnitt 6″ in Verbindung. Die Bodenabschnitte 6″ sind kreisförmig und berühren einander in der Quermittelebene X-X, wie dies Fig. 2 zeigt, wobei sie konzentrisch zur teilzylindrischen Behälterwandung 2′ konzentrisch verlaufen. In jedem kreisförmigen ebenflächigen Bodenabschnitt 6″ ist ein Auslauf 7 mit Verschlußeinrichtung vorgesehen, der bezüglich der Kreismitte bzw. der Rühr- und Schneidflügeldrehachse exzentrisch angeordnet ist.

Die vertikalen Rühr- und Schneidflügel 4 haben eine Außenkontur, die parallel zu den Behälterwandteilen 2′ und zur Bodenkontur verläuft und diesen eng benachbart ist. Die Rühr- und Schneidflügel 4 sind, wie Fig. 1 zeigt, von ihren Drehwellen 4′ über Kurbelarme so getragen, daß ihre Arbeitsbereiche einander teilweise überlappen und sich die Flügel in der in der Längsmittelebene des Behälters ausgerichteten Lage aneinanderschmiegen, wobei der eine Flügel den anderen untergreift.

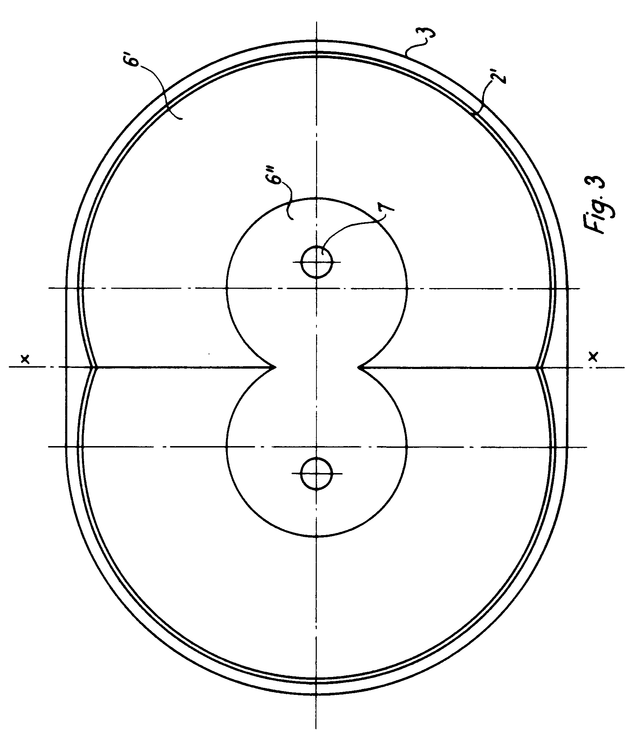

Bei der in Fig. 3 dargestellten Ausführungsform überlappen einander auch die beiden ebenflächigen kreisförmigen unteren Bodenabschnitte 6″ derart, daß für beide Behälterhälften eine gemeinsame, bezüglich der Quermittelebene X-X symmetrisch ausgebildete, aus zwei Kreisabschnitten bestehende untere Bodenfläche gebildet wird.

Der Behälter 2 des erfindungsgemäßen Käsefertigers kann mittels eines in den Raum zwischen Innenbehälter 2 und Außenmantel 3 eingeleiteten Heiz- oder Kühlmediums beaufschlagt und außerdem an eine in der Zeichnung nicht dargestellte Druckmediumquelle angeschlossen werden, um im Gutbehälter in der Entleerungsphase einen Überdruck zu erzeugen und dadurch die Entleerung zu begünstigen. Der Aufnahmeraum 1 kann dabei mittels eines mit Lebensmittel verträglichen komprimierten Gases oder Gasgemisches beaufschlagt werden. Der Gas- bzw. Gasgemischpolster drückt den Fertigerinhalt über die Ausläufe 7 z.B. zu einer nicht dargestellten Portioniereinrichtung, zu einem Käsebruchzwischenbehälter od.dgl., die gegebenenfalls auf einem höheren Niveau angeordnet sind als der Boden 6 des Käsefertigers. Die vorstehend erläuterte Maßnahme ermöglicht sowohl das Austragen der Molke über eine in den Aufnahmeraum 1 schwenkbare Rohrleitung 8 als auch des fertiggestellten Bruch-Molke-Gemisches über die Ausläufe 7 oder auch eine Fertigung unter Überdruck.

Die Erfindung ist nicht auf die beschriebenen Ausführungsbeispiele beschränkt; diese sind im Rahmen der Ansprüche abwandelbar, insbesondere was das Ausmaß der gegenseitigen Überlappung der ebenflächigen Bodenabschnitte gemäß Fig. 3, die Anzahl der Kreisbogenerzeugenden des konkav gewölbten Bodenabschnittes sowie die Größe der Radien der einzelnen Kreisbogenerzeugenden betrifft.

**Patentansprüche**

1. Käsefertiger mit einem einen Aufnahmeraum (1) für das Milchprodukt begrenzenden Behälter (2), der eine aus zwei teilzylindrischen Hälften zusammengesetzte Wandung (2′) und einen sich von dieser nach unten erstreckenden Boden (6) aufweist, welcher ebenfalls aus zwei, entlang einer Quermittelebene (X-X) des Behälters (2) aneinandergrenzenden Hälften besteht, die mit je einem Auslauf (7) versehen sind, wobei in jeder Behälterhälfte ein vertikaler Rühr- und Schneidflügel (4) drehbar ist, welcher die zugeordneten Abschnitte (2′) der Behälterwandung und des Bodenbereiches (6) überstreicht und in einem Behälteroberteil (5) gelagert ist, dadurch gekennzeichnet, daß jede Hälfte des Behälterbodens (6) einen in den vertikalen Behälterwandteil (2′) übergehenden, bezüglich des Aufnahmeraumes (1) konkav gewölbten Abschnitt (6′) und einen an diesen anschließenden ebenflächigen Abschnitt (6″) aufweist, wobei die ebenflächigen Abschnitte der Bodenhälften im wesentlichen kreisförmige Kontur haben und in der Quermittelebene (X-X) des Behälters (2) aneinandergrenzen und wobei der Auslauf (7) in jedem ebenflächigen Abschnitt (6″) bezüglich der Drehachse des Rühr- und Schneidflügels (4) exzentrisch angeordnet ist.

2. Käsefertiger nach Anspruch 1, dadurch gekennzeichnet, daß der konkav gewölbte Abschnitt (6') jeder Bodenhälfte im Vertikalschnitt aus zumindest einem Kreisbogen, vorzugsweise aus zwei aneinanderstoßenden Kreisbögen zusammengesetzt ist, von denen der an den vertikalen Behälterwandteil (2') angrenzende Übergangskreisbogen kleineren Durchmesser hat.

3. Käsefertiger nach Anspruch 1 oder 2, dadurch gekennzeichnet, daß die im wesentlichen kreisförmigen ebenflächigen Abschnitte (6″) der beiden Bodenhälften einander in der Quermittelebene (X-X) des Käsefertigers berühren.

4. Käsefertiger nach Anspruch 1 oder 2, dadurch gekennzeichnet, daß die im wesentlichen kreisförmigen ebenflächigen Abschnitte (6') der beiden Bodenhälften einander bezüglich der Quermittelebene (X-X) des Käsefertigers überlappen.

5. Käsefertiger nach einem der Ansprüche 1 bis 4, dadurch gekennzeichnet, daß der Behälter (2) an eine Druckmediumquelle angeschlossen ist, über welche der Aufnahmeraum (1) zwecks Entleerung desselben unter Überdruck setzbar ist.

## Claims

1. Cheese maker with a container (2) which delimits a receiving chamber (1) for the milk product and which has a wall (2') composed of two partly cylindrical halves and a bottom (6) which extends downwards therefrom and which likewise consists of two halves which adjoin one another along a transverse central plane (X-X) of the container (2) and which are each provided with an outlet (7), there being rotatable in each container half a vertical stirring and cutting blade (4) which sweeps over the associated sections (2') of the container wall and of the bottom region (6) and is mounted in an upper part (5) of the container, characterised in that each half of the container bottom (6) has a section (6') which merges into the vertical container wall part (2') and, in relation to the receiving chamber (1), is curved concavely and a plane section (6″) adjacent thereto, the plane sections of the bottom halves having an essentially circular outline and adjoining one another in the transverse central plane (X-X) of the container (2), and the outlet (7) in each plane section (6″) being arranged eccentrically in relation to the axis of rotation of the stirring and cutting blade (4).

2. Cheese maker according to Claim 1, characterised in that the concavely curved section (6') of each bottom half is composed, in vertical cross-section, of at least one circular arc, preferably of two abutting circular arcs, of which the transition circular arc adjacent to the vertical container wall part (2') is of smaller diameter.

3. Cheese maker according to Claim 1 or 2, characterised in that the essentially circular plane sections (6″) of the two bottom halves are tangent to one another in the transverse central plane (X-X) of the cheese maker.

4. Cheese maker according to Claim 1 or 2, characterised in that the essentially circular plane sections (6') of the two bottom halves overlap one another in relation to the transverse central plane (X-X) of the cheese maker.

5. Cheese maker according to one of Claims 1 to 4, characterised in that the container (2) is connected to a pressure-medium source, via which the receiving chamber (1) can be placed under excess pressure for the purpose of emptying the same.

## Revendications

1. Appareil pour la fabrication de fromage comportant un réservoir (2) qui délimite une enceinte de réception (1) pour le produit laitier, et qui présente une paroi (2') composée de deux moitiés en forme de cylindres partiels et un fond (6) s'étendant vers le bas à partir de cette paroi et également composé de deux moitiés adjacentes le long d'un plan médian transversal (X-X) du réservoir (2) et pourvues chacune d'un orifice d'écoulement (7), une pale verticale d'agitation et de séparation (4) étant prévue dans chacune des moitiés de réservoir, la pale balayant les tronçons (2') associés de la paroi de réservoir et de la zone de fond (6), et étant montée tournante dans une partie supérieure (5) du réservoir, caractérisé en ce que chacune des moitiés de fond de réservoir (6) comporte une partie (6') de courbure concave par rapport à l'enceinte de réception (1) et se raccordant à la partie de paroi de réservoir verticale (2'), ainsi qu'une partie plane (6″) se raccordant à la précédente, les parties planes des moitiés de fond présentant un contour sensiblement circulaire en étant adjacentes au niveau du plan médian transversal (X-X) du réservoir (2), l'orifice d'écoulement (7) étant disposé dans chacune des parties planes (6″), de façon excentrée par rapport à l'axe de rotation de la pale d'agitation et de séparation (4).

2. Appareil pour la fabrication de fromage selon la revendication 1, caractérisé en ce que la partie (6') de courbure concave de chacune des moitiés de fond, est formée, en coupe verticale, par au moins un arc de cercle, de préférence par deux arcs de cercle adjacents, dont celui qui forme le raccordement à la partie de paroi de réservoir verticale (2') présente le diamètre le plus faible.

3. Appareil pour la fabrication de fromage selon la revendication 1 ou 2, caractérisé en ce que les parties planes (6″) de forme sensiblement circulaire des deux moitiés de fond, se touchent au niveau du plan médian transversal (X-X) de l'appareil à fabriquer du fromage.

4. Appareil pour la fabrication de fromage selon la revendication 1 ou 2, caractérisé en ce que les parties planes (6″) de forme sensiblement circulaire des deux moitiés de fond, se chevauchent par rapport au plan médian transversal (X-X) de l'appareil à fabriquer du fromage.

5. Appareil pour la fabrication de fromage selon l'une des revendications 1 à 4, caractérisé en ce que le réservoir (2) peut être raccordé à une source de fluide sous pression, au moyen de laquelle l'enceinte de réception (1) peut être mise en surpression en vue de son vidage.

Fig. 1

EP 0 315 623 B1

Fig. 2

EP 0 315 623 B1

Fig. 3